# EUROPEAN PATENT APPLICATION

(11) **EP 4 198 649 A1**
(43) Date of publication of application: **21.06.2023**
(21) Application number: 21896731.3
(22) Date of filing: 01.11.2021
(51) Int. Cl.: G04F 5/14, G04R 20/02

(54) **DISTRIBUTED CENTERLESS SPACE-BASED TIME REFERENCE ESTABLISHING AND MAINTAINING SYSTEM**

(30) Priority: 27.11.2020 CN 202011364626
(71) Applicant: Xi'an Institute Of Space Radio Technology, Xi'an, Shaanxi 710199 (CN)
(72) Inventor: MENG, Yansong, An City, Shaanxi 710199 (CN); WANG, Guoyong, An City, Shaanxi 710199 (CN); DU, Lijun, An City, Shaanxi 710199 (CN); ZHAO, Chunbo, An City, Shaanxi 710199 (CN); QIN, Xiaowei, An City, Shaanxi 710199 (CN); HE, Keliang, An City, Shaanxi 710199 (CN); YAO, Yuanbo, An City, Shaanxi 710199 (CN)
(74) Representative: Rooney, John-Paul
(86) International application number: PCT/CN2021/127953
(87) International publication number: WO 2022/111230

(57) **Abstract**

A distributed centerless space-based time reference establishing and maintaining system, comprising a space-based time reference constellation consisting of at least three space-based time reference satellites; at least three satellite-borne atomic clocks in a satellite-borne atomic clock group in each satellite are started to work; a single-satellite atomic time generation unit processes a start-up work atomic clock signal to generate a single-satellite atomic time physical signal; the single-satellite atomic time physical signal is sent to a space-based time reference generation unit and an internal laser/microwave time-frequency measurement comparison unit; a time-frequency measurement comparison link is formed between the internal laser/microwave time-frequency measurement comparison unit and internal laser/microwave time-frequency measurement comparison units of other space-based time reference satellites; inter-satellite time-frequency comparison and data transmission of the link are achieved by means of time-frequency measurement comparison; inter-satellite clock error comparison data is obtained by means of the internal laser/microwave time-frequency measurement comparison unit, and transmitted to the space-based time reference generation unit; and the space-based time reference generation unit obtains a space-based time reference physical signal according to the single-satellite atomic time physical signal and the inter-satellite clock difference comparison data.

## Description

The present disclosure claims priority to Chinese Patent Application No. 202011364626.2, titled "METHOD AND SYSTEM FOR ESTABLISHING AND KEEPING DISTRIBUTED CENTERLESS SPACE-BASED TIME REFERENCE", filed on November 27, 2020 with the China National Intellectual Property Administration, which is incorporated herein by reference in its entirety.

### FIELD

The present disclosure relates to the field of satellite navigation, and in particular to a method and a system for establishing and keeping a distributed centerless space-based time reference.

### BACKGROUND

At present, a system time reference of a global satellite navigation system is established and kept on the ground, and is generated and kept by a centrally placed time system in one master control station or two mutually backup master control stations. A time system includes a centrally placed timekeeping clock group and an internal measurement comparison system, an external traceability system, a data processing system and a signal generation system. The satellite clock error model parameters of each satellite and the system time reference are measured on the ground, and are transmitted to the satellite through the uplink. The satellite keeps the local time during an interval between transmissions based on timekeeping of a spaceborne atomic clock. The system time reference generated by the master control station is compared with the national standard time UTC (k) through the time-frequency comparison link, so as to trace back to the UTC.

In order to further improve accuracy of navigation and positioning of the European Galileo system, the Kepler satellite navigation system architecture is proposed. In the Kepler system architecture, a method for establishing a centralized system time reference is proposed, which integrates the space and the ground, taking into account short-term, mid-term and long-term timekeeping performance. In this method, a cavity-stabilized laser on the MEO satellite ensures the short-term stability (1-30s) of the system time reference, an iodine molecular clock carried on the LEO satellite ensures the medium-term stability(30s-1000s), and a hydrogen atomic clock at the ground station provides the long-term stability(longer than 1000s). This method combines the advantages of atomic clocks on the ground and spaceborne atomic clocks, and finally forms a central and extremely high-performance system time reference at the ground station.

Stanford University in the United States has also carried out research on the transfer of high-precision time reference from ground to space. Through the satellite-to-ground laser communication link, the high performance cold atomic clock signal of the National Standard Laboratory on the ground is transmitted to the spaceborne atomic clock. That is, the spaceborne atomic clock is synchronized to the cold atomic clock, and the spaceborne time keeps the performance of the cold atomic clock on the ground on a scale of several hours.

The time reference established by the first method above is essentially on the ground station, and is a time reference with a central node and integrating space and ground. The second time reference above is to transmit the time reference on the ground to the satellite, and its continuous measurement locking mechanism based on the satellite-ground link has risks in the robustness of the time reference.

### SUMMARY

The technical problem to be solved by the present disclosure is to overcome the disadvantages of the existing technology. Therefore, a method and a system for establishing and keeping a distributed centerless space-based time reference are provided.

The technical solutions of the present disclosure are described as follows. A system for establishing and keeping a distributed centerless space-based time reference includes a space-based time reference constellation includes at least three space-based time reference satellites. Each of the at least three space-based time reference satellites is provided with a satellite-borne atomic clock group, a single satellite atomic time generation unit, a space-based time reference generation unit, an internal laser or microwave time-frequency measurement comparison unit, a space-ground time reference comparison unit, and a space-based time reference transfer unit.

At least three atomic clocks in the satellite-borne atomic clock group are in operation. The single satellite atomic time generation unit is configured to process a signal of the atomic clock that is in operation to generate a single satellite atomic time physical signal. The single satellite atomic time physical signal is transmitted to the space-based time reference generation unit and the internal laser or microwave time-frequency measurement comparison unit.

A time-frequency measurement comparison link is formed between the internal laser or microwave time-frequency measurement comparison unit and an internal laser or microwave time-frequency measurement comparison unit of another space-based time reference satellite, time-frequency comparison and data transmission between satellites are performed through the time-frequency measurement comparison link, and the internal laser or microwave time-frequency measurement comparison unit is configured to acquire clock error comparison data between satellites and transmit the acquired clock error comparison data to the space-based time reference generation unit.

The space-based time reference generation unit is configured to acquire a space-based time reference physical signal based on the single satellite atomic time physical signal and the clock error comparison data.

Preferably, a space-ground time reference comparison link is formed between the space-ground time reference comparison unit and ground, for comparing the space-based time reference with a ground time reference and tracing the space-based time reference to a ground atomic time and the UTC.

Preferably, the space-ground time reference comparison link includes a laser time-frequency comparison link and a microwave time-frequency comparison link, the laser time-frequency comparison link and the microwave time-frequency comparison link both are configured to compare the space-based time reference with the ground time reference, and the microwave time-frequency comparison link is based on a bidirectional co-frequency transceiving mechanism.

Preferably, a space-based time reference transfer link is formed between the space-based time reference transfer unit and a medium-low orbit satellite, and the space-based time reference transfer link is a laser or microwave time-frequency transfer link configured to transmit the space-based time reference to the medium-low orbit satellite.

Preferably, the transfer is performed as follows.
(1) Based on the microwave or laser time-frequency transfer link, the space-based time reference physical signal is modulated and transmitted to the medium-low orbit satellite by a laser or microwave carrier.
(2) The medium-low orbit satellite is configured to, after receiving a signal sent by the space-based time reference satellite, demodulate the space-based time reference physical signal, and measure a time difference between a local atomic clock signal and the space-based time reference physical signal with the demodulated space-based time reference physical signal as a reference signal.
(3) A relativistic delay, a path delay and a device delay are deducted from the time difference measured for the medium-low orbit satellite, to calculate clock error or frequency error data between an atomic clock of the medium-low orbit satellite and the space-based time reference, and an initial phase or time deviation, an initial frequency deviation and a linear drift rate of the atomic clock of the medium-low orbit satellite are obtained based on the calculated data.

Preferably, the space-based time reference satellite is a high-orbit satellite equipped with a metrology-grade timekeeping atomic clock.

Preferably, the single satellite atomic time generation unit includes a single satellite internal time-frequency measurement comparison unit and a paper time generation unit.

The single satellite internal time-frequency measurement comparison unit is configured to, for each of the at least three atomic clocks that are in operation, compare the atomic clock with the single satellite atomic time physical signal to acquire a time or frequency error between the atomic clock and a single satellite atomic time, so as to determine frequency stability and a weight of the atomic clock.

The paper time generation unit is configured to generate, based on the determined frequency stability and the determined weight of the atomic clock, a single satellite paper time by using a time scale algorithm.

A single satellite atom physicalizing unit is configured to perform servo control on the single satellite atom physicalizing unit based on the single satellite paper time to generate the single satellite atomic time physical signal.

Preferably, the space-based time reference generation unit includes a space-based time reference paper time generation unit and a space-based time reference physicalizing unit.

The space-based time reference paper time generation unit is configured to receive data transmitted through the internal laser or microwave time-frequency measurement comparison link, calculate a clock error between satellites from the data, and generate a space-based time reference paper time by using a time scale algorithm.

The space-based time reference physicalizing unit is configured to modify, based on a time difference between a single satellite atomic time and the space-based time reference paper time through frequency or phase modulation, one physical signal outputted by the single satellite atomic time to be consistent with the space-based time reference, so that the space-based time reference paper time is physicalized on a single satellite.

Preferably, the time scale algorithm includes an Algos algorithm, an AT1 algorithm, a Kalman filter algorithm, and a classic weighted average algorithm.

Compared with the conventional technology, the present disclosure has the following beneficial effects.

In the distributed centerless space-based time reference according to the present disclosure, the time keeping group includes navigation-grade or metrology-grade time keeping atomic clocks, which are distributed on multiple navigation satellites (hereinafter referred to as space-based time reference satellites). Internal measurement comparison performed through a time-frequency transfer link between satellites, and all measurement data are transmitted and distributed to all the space-based time reference satellites. On all the space-based time reference satellites, a paper space-based time reference is generated by using the time scale algorithm and is physicalized, and then is reproduced on other navigation satellites through a microwave or laser time-frequency transfer link. Through a satellite-to-ground microwave/laser time-frequency comparison link, the space-based time reference is regularly compared with the ground time reference established and kept on the ground, and is regularly traced to the UTC.
(1) In the existing methods for establishing and keeping the time reference, the time reference is generally generated on the ground, or the spaceborne atomic clock is timed with the ground time reference. The ground time reference is remotely reproduced on the satellite, and the spaceborne atomic clock is highly dependent on the ground time reference. In the present disclosure, the time reference is established on the satellite and forms a heterogeneous hot backup with the ground time reference, thereby greatly improving accuracy and reliability of the system time reference.
(2) In the existing methods for establishing and keeping the time reference, multiple atomic clocks placed in a timekeeping laboratory on the ground are measured and compared to generate a physical signal, which is centralized and centered. The space-based time reference according to the present disclosure is a distributed centerless time reference established based on multiple high-orbit satellites through a time-frequency measurement comparison link inside the space-based time reference. The time reference can generate the space-based time reference paper time and a physical signal on any satellite in the space-based time reference constellation. That is, computation and physicalizing of the space-based time reference paper time is distributed and centerless. Moreover, any satellite in the space-based time reference constellation can be compared with and traced to the ground time reference. The comparison and traceability of the space-based time reference are also distributed and centerless. The distributed centerless space-based time reference is superior to the centralized time reference in terms of system security.
(3) The existing space-based time reference generally relies on the navigation-grade atomic clock with good short-term stability configured on the satellite for short-term timekeeping. The space-based time reference is established and kept by frequently adjusting the satellite time reference based on a time reference generated on a low-orbit satellite or on the ground. According to the present disclosure, multiple satellites in space each are equipped with metrology-grade timekeeping atomic clocks and a time-frequency comparison network based on microwave-laser fusion and integrating high-precision time-frequency comparison measurement and communication, thereby ensuring long-term timekeeping under the premise that the precision of the space-based time reference is the same as the precision of the ground time reference.

### BRIEF DESCRIPTION OF THE DRAWINGS

Figure 1 is a schematic block diagram illustrating a system for establishing and keeping a distributed centerless space-based time reference;
Figure 2 is a schematic structural diagram illustrating a structure inside a space-based time reference constellation;
Figure 3 is a block diagram illustrating a structure inside a single satellite;
Figure 4 illustrates a single satellite atom time generation unit; and
Figure 5 illustrates a space-based time reference generation unit inside a single satellite.

### DETAILED DESCRIPTION OF EMBODIMENTS

The present disclosure is further described below in conjunction with the embodiments.

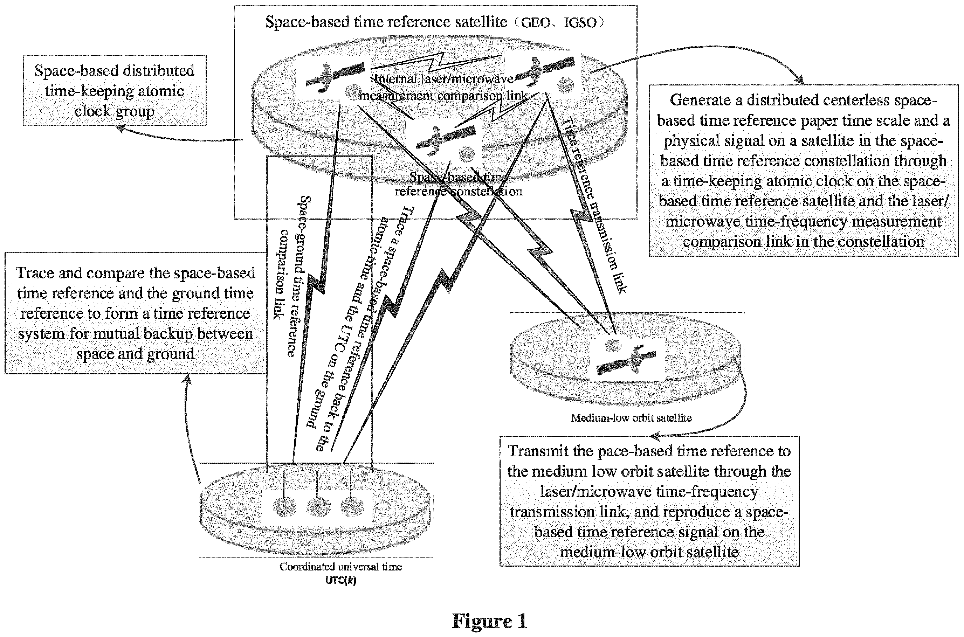

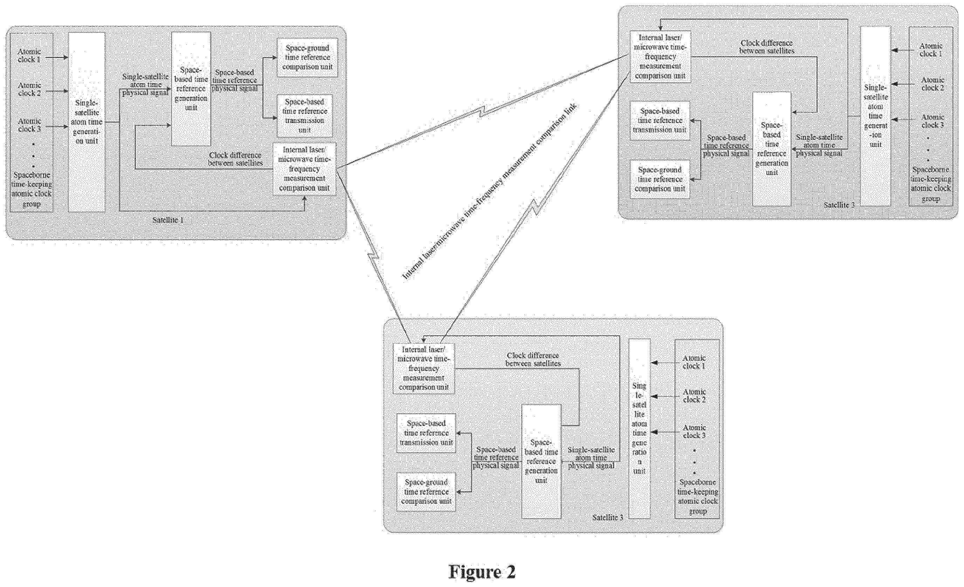

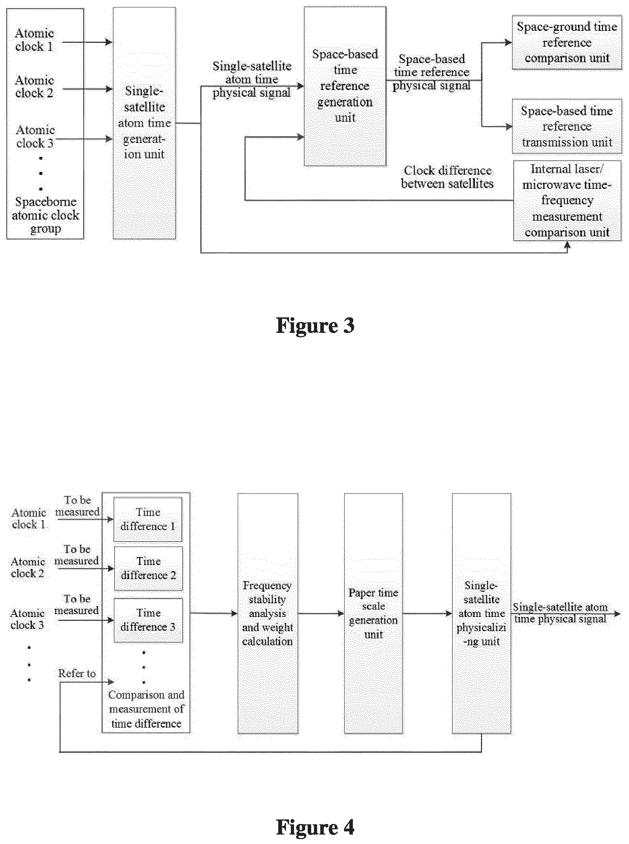

As shown in Figure 1, the system for establishing and keeping a distributed centerless space-based time reference according to the present disclosure includes a space-based time reference constellation, a space-ground time reference comparison link and a space-based time reference transfer link.
(1) As shown in Figure 2, the space-based time reference constellation includes multiple space-based time reference satellites with timekeeping atomic clocks and an internal laser or microwave time-frequency measurement comparison link. The pace-based time reference satellites each are preferably a GEO satellite and an IGSO satellite. The number of the space-based time reference satellites is not less than three. As shown in Figure 3, a single space-based time reference satellite includes an atomic clock group including multiple atomic clocks, a single satellite atomic time generation unit, a space-based time reference generation unit, a space-ground time reference comparison unit, a space-based time reference transfer unit, and an internal laser or microwave time-frequency measurement comparison unit inside. An internal laser or microwave time-frequency measurement comparison link is formed between internal laser or microwave time-frequency measurement comparison units of two satellites. The internal laser or microwave time-frequency measurement comparison link includes an optical carrier radio frequency time-frequency comparison technologic system, an optical frequency comparison technologic system and a microwave time-frequency comparison technologic system. The time-frequency comparison link integrates time-frequency comparison and data transmission.
(2) The space-ground time reference comparison link is formed between a space-ground time reference comparison unit of the space-based time reference satellite and a time comparison device of a ground time reference maintenance unit. The technologic system of this link includes a laser time-frequency comparison link technologic system and a microwave time-frequency comparison link technologic system, to compare a space-based time reference with a ground time reference and trace the space-based time reference to the ground atomic time and the UTC. The microwave time-frequency comparison link is based on a bidirectional co-frequency transceiving mechanism, which can offset the ionospheric error related to frequency, thereby greatly improving the accuracy of time-frequency comparison.
(3) The space-based time reference transfer link is formed between a space-based time reference transfer unit of the space-based time reference satellite and a time transfer device of a medium-low orbit satellite. The space-based time reference is reproduced to the medium-low orbit satellite with the microwave/laser time-frequency transfer technology, which reduces the dependence of the medium-low orbit satellite on the ground station and improves the autonomous operation ability of the medium-low orbit satellite. The technologic system of this link includes the laser time-frequency transfer link technologic system and the microwave time-frequency transfer link technologic system, so as to transmit the space-based time reference to the medium-low orbit satellite.

The method for establishing and keeping a distributed centerless space-based time reference according to the present disclosure includes the following steps.

### 1. Establishment of space-based time reference

The establishment of the space-based time reference includes establishment of a single satellite atomic time, laser or microwave time-frequency measurement comparison between satellites, and establishment and maintenance of the space-based time reference.

### (1) Establishment of single satellite atomic time

A spaceborne timekeeping atomic clock group includes multiple timekeeping atomic clocks. The timekeeping atomic clock includes a mercury ion clock, a hydrogen atomic clock and the like. The number of clocks on each satellite is 3 to 4. Generally, one atomic clock operates, one atomic clock performs hot backup, and 1 to 2 atomic clocks perform cold backup. In the present disclosure, at least 3 atomic clocks operate, and at most one atomic clock performs backup.

In this embodiment, the establishment of a single satellite atomic time is described with an example in which four timekeeping hydrogen atomic clocks are arranged on a single satellite. In this embodiment, three among the four timekeeping atomic clocks are in operation and one of the four timekeeping atomic clocks performs cold backup. As shown in Figure 4, output signals of all atomic clocks that are in operation and an output signal of the single satellite atom time physicalizing unit are transmitted to a time difference comparison measurement unit through a phase stable cable. The time difference comparison measurement unit outputs a time difference or frequency error between each atomic clock and the single satellite atomic time. Frequency stability and a weight of each atomic clock are determined by calculating the Allan variance. The paper time of the single satellite atom time is generated based on the time scale algorithm. A frequency modulation phase modulation unit in the single satellite atom physicalizing unit is adjusted with the paper time as a reference. Finally, a single satellite atom physics signal with a time difference of 0 from the paper time is outputted. This solution makes full use of the atomic clock resources on the satellite and combines the advantages of multiple atomic clocks. The integrated signal has higher stability than a signal outputted by a single atomic clock.

### (2) Laser or microwave time-frequency measurement comparison between satellites

Through the laser time-frequency measurement comparison link (including an optical-borne radio-frequency time-frequency comparison link and/or an optical frequency comparison link) and/or an microwave link between satellites, time or frequency difference information of the single satellite atom time with a link error is obtained on the two satellites. Then, the relativistic delay, the path delay and the device delay are deducted from the obtained information. Finally, an accurate time or frequency difference between single satellite atom times kept on the two satellites is calculated.

The optical-borne radio-frequency time-frequency comparison link is based on the optical-borne radio-frequency time-frequency comparison technology integrating time-frequency comparison based on data frame and communication. The feature of the optical-borne radio-frequency time-frequency comparison technology is that the laser is indirectly locked in a single satellite atom time through an optical frequency comb, so that the laser frequency and the microwave frequency are homologous, thereby greatly improving the stability of the laser carrier frequency and improving the accuracy of the internal laser time-frequency measurement comparison link. Another feature of the optical-borne radio-frequency time-frequency comparison technology is that the bidirectional one way ranging is realized based on the data frame ranging system, which not only realizes time comparison but also realizes bidirectional transmission of the time difference comparison data, thereby providing data support for calculating a clock error between a single satellite and another satellite on this satellite. The optical frequency comparison link may measure and calculate the clock error between satellites by laser bidirectional frequency comparison.

### (3) Establishment and maintenance of space-based time reference

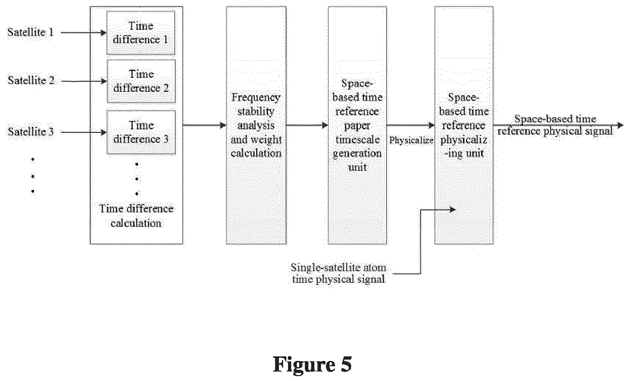

As shown in Figure 5, the space-based time reference generation unit includes a time difference calculation unit, a frequency stability analysis and weight calculation unit, a space-based time reference paper time generation unit and a space-based time reference physicalizing unit. The time difference calculation unit receives clock error data from another satellite via the internal laser or microwave time-frequency measurement comparison unit, and calculates a time difference between the single satellite atomic time of this satellite and the single satellite atomic time of another satellite. After the frequency stability is analyzed and a weight is calculated, the weight of each satellite atomic clock is determined. Then, the space-based time reference paper time generation unit generates the paper time by the time scale generation method. The time scale generation methods include the Algos algorithm, the AT1 algorithm, the Kalman filtering algorithm, the classic weighted average algorithm and the like. The space-based time reference physicalizing unit generates the space-based time reference physical signal through frequency or phase modulation based on the time difference between the single satellite atomic time and the paper time, so that the space-based time reference paper time is physicalized on a single satellite.

### 2. Comparison of time reference between space and ground

A space-to-ground time reference comparison link is firmed between a space-to-ground time reference comparison unit of any space-based time reference satellite in the space-based time reference constellation and a time comparison device of the ground time reference maintenance unit. The technologic system of this link includes the laser time-frequency comparison link and the microwave time-frequency comparison link, that is, implements not only the laser time-frequency measurement and comparison but also the microwave time-frequency measurement and comparison. The laser time-frequency comparison link supports the optical-borne radio-frequency time-frequency comparison and the optical frequency comparison.

Taking the space-ground microwave time-frequency comparison link as an example, the time difference data including the downlink delay is measured on the ground, and the time difference data of the uplink delay is measured by the space-ground time reference comparison unit of the space-based time reference satellite. The clock error between the space-based time reference and the ground time reference is calculated with the principle of space-ground microwave time-frequency comparison technology.

The clock error between the space-based time reference and the ground time reference may serve as a basis for recovery of the ground time reference after failure, and a basis for recovery of the space-based time reference after failure. Through the comparison and traceability of space and ground time references, the space-based time reference and the ground time reference can be mutually prepared in the heterogeneous normal state.

### 3. Transfer of space-based time reference

(1) A microwave or laser time-frequency transfer link between a satellite in the space-based time reference constellation and the medium-low orbit satellite is established.
(2) Through the microwave or laser time-frequency transfer link, the space-based time reference physical signal is modulated and then transmitted to the medium-low orbit satellite by a laser or microwave carrier.
(3) After receiving the signal sent by the space-based time reference satellite, the medium-low orbit satellite demodulates the space-based time reference physical signal, and measures a time difference between the local atomic clock signal and the space-based time reference physical signal with the demodulated space-based time reference physical signal as a reference signal.
(4) The relativistic delay, the path delay and the device delay are deducted from the time difference measured for the medium-low orbit satellite, so as to calculate clock error or frequency difference data between an atomic clock of the medium-low orbit satellite and the space-based time reference. An initial phase (time) deviation, an initial frequency deviation and a linear drift rate of the atomic clock of the medium-low orbit satellite are obtained.

The common knowledge of the skilled in the art is not described in detail in the present disclosure.

## Claims

1. A system for establishing and keeping a distributed centerless space-based time reference, comprising:
a space-based time reference constellation comprising at least three space-based time reference satellites, wherein
each of the at least three space-based time reference satellites is provided with a satellite-borne atomic clock group, a single satellite atomic time generation unit, a space-based time reference generation unit, an internal laser or microwave time-frequency measurement comparison unit, a space-ground time reference comparison unit, and a space-based time reference transfer unit;
at least three atomic clocks in the satellite-borne atomic clock group are in operation, the single satellite atomic time generation unit is configured to process a signal of the atomic clock that is in operation to generate a single satellite atomic time physical signal, and the single satellite atomic time physical signal is transmitted to the space-based time reference generation unit and the internal laser or microwave time-frequency measurement comparison unit;
a time-frequency measurement comparison link is formed between the internal laser or microwave time-frequency measurement comparison unit and an internal laser or microwave time-frequency measurement comparison unit of another space-based time reference satellite, time-frequency comparison and data transmission between satellites are performed through the time-frequency measurement comparison link, and the internal laser or microwave time-frequency measurement comparison unit is configured to acquire clock error comparison data between satellites and transmit the acquired clock error comparison data to the space-based time reference generation unit; and
the space-based time reference generation unit is configured to acquire a space-based time reference physical signal based on the single satellite atomic time physical signal and the clock error comparison data.

2. The system according to claim 1, wherein a space-ground time reference comparison link is formed between the space-ground time reference comparison unit and ground, for comparing the space-based time reference with a ground time reference and tracing the space-based time reference to a ground atomic time and UTC.

3. The system according to claim 2, wherein the space-ground time reference comparison link comprises a laser time-frequency comparison link and a microwave time-frequency comparison link, the laser time-frequency comparison link and the microwave time-frequency comparison link both are configured to compare the space-based time reference with the ground time reference, and the microwave time-frequency comparison link is based on a bidirectional co-frequency transceiving mechanism.

4. The system according to claim 1, wherein a space-based time reference transfer link is formed between the space-based time reference transfer unit and a medium-low orbit satellite, and the space-based time reference transfer link is a laser or microwave time-frequency transfer link configured to transmit the space-based time reference to the medium-low orbit satellite.

5. The system according to claim 4, wherein the transmitting comprises:
(1) based on the microwave or laser time-frequency transfer link, the space-based time reference physical signal is modulated and transmitted to the medium-low orbit satellite by a laser or microwave carrier;
(2) the medium-low orbit satellite is configured to, after receiving a signal sent by a space-based time reference satellite, demodulate the space-based time reference physical signal, and measure a time difference between a local atomic clock signal and the space-based time reference physical signal with the demodulated space-based time reference physical signal as a reference signal; and
(3) a relativistic delay, a path delay and a device delay are deducted from the time difference measured for the medium-low orbit satellite, to calculate clock error or frequency difference data between an atomic clock of the medium-low orbit satellite and the space-based time reference, and an initial phase or time deviation, an initial frequency deviation and a linear drift rate of the atomic clock of the medium-low orbit satellite are obtained based on the calculated data.

6. The system according to claim 1, wherein the space-based time reference satellite is a high-orbit satellite equipped with a metrology-grade timekeeping atomic clock.

7. The system according to claim 1, wherein the single satellite atomic time generation unit comprises a single satellite internal time-frequency measurement comparison unit and a paper time generation unit, wherein
the single satellite internal time-frequency measurement comparison unit is configured to, for each of the at least three atomic clocks that are in operation, compare the atomic clock with the single satellite atomic time physical signal to acquire a time or frequency difference between the atomic clock and a single satellite atomic time, so as to determine frequency stability and a weight of the atomic clock; and
the paper time generation unit is configured to generate, based on the determined frequency stability and the determined weight of the atomic clock, a single satellite paper time by using a time scale algorithm,
wherein a single satellite atom physicalizing unit is configured to perform servo control on the single satellite atom physicalizing unit based on the single satellite paper time to generate the single satellite atomic time physical signal.

8. The system according to claim 1, wherein the space-based time reference generation unit comprises:
a space-based time reference paper time generation unit configured to receive data transmitted through the internal laser or microwave time-frequency measurement comparison link, calculate a clock error between satellites from the data, and generate a space-based time reference paper time by using a time scale algorithm; and
a space-based time reference physicalizing unit configured to modify, based on a time difference between a single satellite atomic time and the space-based time reference paper time through frequency or phase modulation, one physical signal outputted by the single satellite atomic time to be consistent with the space-based time reference, so that the space-based time reference paper time is physicalized on a single satellite.

9. The system according to claim 8, wherein the time scale algorithm comprises an Algos algorithm, an AT1 algorithm, a Kalman filter algorithm, and a classic weighted average algorithm.
